# EUROPÄISCHE PATENTSCHRIFT

(11) **EP 1 585 052 B1**
(45) Veröffentlichungstag und Bekanntmachung des Hinweises auf die Patenterteilung: **19.12.2007**
(21) Anmeldenummer: 05001691.4
(22) Anmeldetag: 27.01.2005
(51) Int. Cl.: G06K 7/14

(54) **Verfahren und Vorrichtung zum Lesen eines Strichcodes**
Method and apparatus for reading a bar code
Procédé et dispositif pour la lecture d'un code à barres

(30) Priorität: 08.04.2004 DE 102004017504
(43) Veröffentlichungstag der Anmeldung: 12.10.2005
(73) Patentinhaber: SICK AG, 79183 Waldkirch (DE)
(72) Erfinder: Reichenbach, Jürgen, 79312 Emmendingen (DE); Hafner, Carl Joseph, 79276 Reute (DE); Schöpflin, Uwe, 79297 Niederwinden (DE)
(74) Vertreter: Manitz, Finsterwald & Partner GbR

(56) Entgegenhaltungen:
- EP-A- 0 310 921
- US-A1- 2002 021 835
- US-A1- 2002 121 551

## Beschreibung

Die Erfindung betrifft ein Verfahren zum Lesen eines eine vorgegebene Anzahl von Codeelementen, insbesondere Balken und Lücken, umfassenden maschinenlesbaren Strichcodes gemäß dem Oberbegriff des Anspruchs 1. Ein derartiges Verfahren ist aus US 2002/0021835 A1 bekannt. Die Erfindung betrifft weiterhin eine entsprechende Vorrichtung.

Derartige Verfahren und Vorrichtungen zum maschinellen Lesen eines beispielsweise auf eine Verpackung aufgedruckten Strichcodes sind grundsätzlich bekannt. Prinzipiell kann ein Strichcode mittels eines Kontaktstifts oder eines Laserscanners ausgelesen werden. Darüber hinaus ist auch bekannt, einen Strichcode mittels einer Matrixkamera auszulesen, die im Gegensatz zu Scannern keine beweglichen Teile, sondern fotosensitive CCD-Elemente aufweist, wobei durch optische Abbildung ein Bild des Strichcodes erzeugt werden kann.

Nachteilig bei einer derartigen Matrixkamera ist jedoch, dass sie ein beschränktes Bildfeld besitzt. Dies hat zur Folge, dass durch eine Matrixkamera lediglich solche Strichcodes ausgelesen werden können, die vollständig in das Bildfeld der Matrixkamera passen. Strichcodes hingegen, die aufgrund ihrer Größe über das Bildfeld der Matrixkamera hinausragen, können nicht vollständig gelesen und somit nicht decodiert werden. Eine gängige Größe des Bildfelds einer Matrixkamera beträgt beispielsweise 30 mm x 40 mm.

EP 0 310 921 betrifft einen Strichcode-Laserscanner, der mit einem eindimensionalen Sensor zum Lesen von Strichcodes ausgestattet ist. Dabei wird eine Vielzahl von parallel zueinander verlaufenden Abtastlinien gescannt, um eine Rekonstruktion des vollständigen Strichcodes zu erreichen. US 2002/121551 A1 beschreibt ein entsprechendes Verfahren, das eine Laserquelle und eine Photodiode verwendet, um mehrere Abtastwege zu scannen, wobei anstelle der Photodiode auch eine CCD-Kamera verwendet werden könnte.

Der vorliegenden Erfindung liegt die Aufgabe zugrunde, ein Verfahren und eine Vorrichtung der eingangs genannten Art so auszubilden, dass auch ein die Größe des Bildfelds einer Matrixkamera überschreitender Strichcode mittels der Matrixkamera decodierbar ist.

Erfindungsgemäß wird diese Aufgabe ausgehend von einem Verfahren der eingangs genannten Art durch die Merkmale des Anspruchs 1 gelöst.

Der die Vorrichtung betreffende Teil der Aufgabe wird ausgehend von einer Vorrichtung der eingangs genannten Art durch die Merkmale des Anspruchs 12 gelöst.

Die Erfindung zeichnet sich dadurch aus, dass die Teilabschnitte des zu lesenden Strichcodes, insbesondere eines 1D- oder 2D-Strichcodes, mittels optischer Abbildung insbesondere fotografisch und zweidimensional erfasst, als Bilder gespeichert und die Bilder anschließend zu einem Abbild des Strichcodes zusammengesetzt werden, so dass aus dem Abbild des Strichcodes die durch den Strichcode codierte Information rekonstruiert werden kann. Unter Abbild des Strichcodes ist auch jedes Bild des Strichcodes zu verstehen, das eine vollständige Rekonstruktion der durch den Strichcode codierten Information erlaubt. Das Abbild muss sich somit nur über die ganze Lauflänge des Strichcodes, nicht jedoch über dessen gesamte Höhe erstrecken.

Die Teilabschnitte des Strichcodes umfassen jeweils wenigstens ein Codeelement. Damit ein Codeelement von einem Teilabschnitt des Strichcodes umfasst ist, muss das Codeelement nicht vollständig innerhalb des Teilabschnitts angeordnet sein. Vielmehr ist es ausreichend, wenn ein die Breite des Codeelements umfassender Ausschnitt des Codeelements innerhalb des Teilabschnitts des Strichcodes angeordnet ist. Dies bedeutet insbesondere, dass zur Rekonstruktion der codierten Information die Codeelemente nicht über ihre gesamte Höhe aufgenommen werden müssen. Alle Teilbereiche zusammen umfassen alle Codeelemente des Strichcodes.

Ein wesentlicher Vorteil der Erfindung besteht darin, dass mittels einer Matrixkamera auch Strichcodes gelesen werden können, die aufgrund des beschränkten Bildfelds der Matrixkamera bislang nicht vollständig gelesen und somit nicht decodiert werden konnten. Insbesondere kann die Modulbreite des zu lesenden Strichcodes, d.h. die Breite des schmalsten Codeelements, erhöht werden. Strichcodes mit größerer Modulbreite sind für Unzulänglichkeiten beim Drucken des Strichcodes weniger anfällig und können deshalb mit größerer Zuverlässigkeit gelesen werden.

Die Bilder werden mittels einer Bildaufnahmevorrichtung, einer Matrixkamera, aufgenommen. Bei einer Kamera kann der Leseabstand durch Einstellen der Objektivbrennweite besonders einfach eingestellt werden. Weiterhin zeichnet sich eine Kamera durch eine hohe Sensitivität bei kontrastschwachen Strichcodes aus. Bei einer Matrixkamera wird der zu lesende Strichcode optisch auf eine matrixförmige Anordnung von CCD-Sensoren abgebildet. Insbesondere kann der Strichcode auch mit einer oder mehreren LEDs der Kamera beleuchtet werden.

Des Weiteren wird erfindungsgemäß vorgeschlagen, dass die Bilder nacheinander, insbesondere mit einer konstanten Bildfrequenz, aufgenommen werden. Hierdurch kann insbesondere vermieden werden, dass zur Aufnahme der Bilder mehrere Bildaufnahmevorrichtungen benötigt werden. Bei Verwendung lediglich einer Bildaufnahmevorrichtung kann die Vorrichtung zum Lesen des Strichcodes besonders kostengünstig hergestellt werden. Prinzipiell können aber auch mehrere Bildaufnahmevorrichtungen verwendet werden.

Besonders vorteilhaft ist es, wenn zur Aufnahme der Bilder der Strichcode insbesondere mit einer konstanten Geschwindigkeit relativ zu der Bildaufnahmevorrichtung bewegt wird. Dies ist insbesondere dann von Vorteil, wenn der Strichcode dabei durch das Bildfeld der Bildaufnahmevorrichtung wandert. Benachbarte und/oder einander überlappende Teilabschnitte des Strichcodes können hierdurch auf besonders einfache Weise aufgenommen werden. Der Strichcode kann beispielsweise mittels eines Förderbands relativ zu der Bildaufnahmevorrichtung bewegt werden.

Nach einer besonders bevorzugten Ausführungsform der Erfindung werden beim Zusammensetzen der Bilder oder der Teile hiervon deren gegenseitige Relativpositionen aus der Bildfrequenz der Aufnahmen und der Geschwindigkeit des Strichcodes berechnet. Insbesondere kann bei konstanter Bildfrequenz f und konstanter Geschwindigkeit v die Verschiebung Δs der nacheinander aufgenommenen Bilder gegeneinander aus dem Verhältnis der Geschwindigkeit v und der Bildfrequenz f berechnet werden: Δs ∝ v/f.

Zusätzlich oder alternativ können beim Zusammensetzen der Bilder oder der Teile hiervon deren gegenseitige Relativpositionen durch Korrelation übereinstimmender Bildinhalte der Bilder oder der Teile hiervon bestimmt werden. Das Abbild des Strichcodes kann hierbei durch Überlagerung der übereinstimmenden Bildinhalte der Bilder oder der Teile hiervon erzeugt werden. Eine Bestimmung der gegenseitigen Relativpositionen der Bilder oder der Teile hiervon durch Korrelation übereinstimmender Bildinhalte wird bevorzugt dann durchgeführt, wenn die Geschwindigkeit des Strichcodes und/oder die Bildfrequenz der Aufnahmen lediglich näherungsweise bekannt ist.

Zusätzlich oder alternativ können beim Zusammensetzen der Bilder oder der Teile hiervon deren gegenseitige Relativpositionen durch Vergleich der Bildpositionen zumindest von Start-, Stopp- und/oder Mittenzeichen des Strichcodes bestimmt werden. Das Zusammensetzen der Bilder oder der Teile hiervon bzw. die Korrelation übereinstimmender Bildinhalte ist allerdings nicht auf die Verwendung spezieller Start-, Stopp- und/oder Mittenzeichen des Strichcodes beschränkt. Beim Zusammensetzen bzw. bei der Korrelation kann auch auf die eigentlichen Codeelemente zurückgegriffen werden, durch welche die betreffende Information tatsächlich codiert wird. Diese Codeelemente können beim Zusammensetzen bzw. bei der Korrelation alternativ oder zusätzlich zu den speziellen Start-, Stopp-und/oder Mittenzeichen des Strichcodes herangezogen werden. Die Bilder oder die Teile hiervon können hierbei durch Überlagerung der Bildpositionen z. B. der Start-, Stopp- und/oder Mittenzeichen zu dem Abbild des Strichcodes zusammengesetzt werden. Die Bildpositionen z. B. der Start-, Stopp- und/oder Mittenzeichen werden bevorzugt dann zur Bestimmung der gegenseitigen Relativpositionen der Bilder oder der Teile hiervon herangezogen, wenn die Geschwindigkeit des Strichcodes und/oder die Bildfrequenz der Aufnahmen zumindest weitgehend unbekannt ist.

Nach einer weiteren bevorzugten Ausführungsform der Erfindung werden die abgespeicherten Bilder oder die Teile hiervon in einem Rekonstruktionspuffer zusammengesetzt. Der Rekonstruktionspuffer kann als separates Bauteil oder als Teil des Datenspeichers ausgebildet sein, in dem die Bilder der Teilabschnitte des Strichcodes abgespeichert werden.

Zur Rekonstruktion der durch den Strichcode codierten Information werden bevorzugt jeweils entlang wenigstens einer Linie verlaufende Bildinhalte der Bilder zusammengesetzt. Eine durch aneinandergereihte Bildpunkte eines Bilds gebildete Linie kann insbesondere senkrecht zur Längserstreckung der in dem Bild abgebildeten Codeelemente orientiert sein. Grundsätzlich kann die zur Rekonstruktion herangezogene Linie jedoch jeden beliebigen Winkel in Bezug auf die Codeelemente aufweisen. Wenn die Strichcodes auf geförderten Gegenständen angebracht sind und während des Förderns der Gegenstände gelesen werden, kann die Linie parallel zur Förderrichtung verlaufen, und zwar unabhängig von der Orientierung der Strichcodes relativ zur Förderrichtung, d. h. in dieser Variante wird bewusst in Kauf genommen, dass sich der Strichcode schräg zur Förderrichtung erstreckt. Eine solche Schrägstellung der Codeelemente relativ zu der zur Rekonstruktion verwendeten Linie ist jedoch für die Erfindung völlig unproblematisch. Hierdurch wird ermöglicht, dass lediglich Teile der abgespeicherten Bilder zusammengesetzt werden müssen, um die in dem Strichcode codierte Information vollständig decodieren zu können, so dass insbesondere der Rekonstruktionspuffer weniger Speicherplatz benötigt. Darüber hinaus können zur Rekonstruktion des Strichcodes herkömmliche Algorithmen verwendet werden, die beispielsweise auf einem Scannverfahren des Strichcodes entlang einer Linie beruhen.

Die Bilder oder die Teile hiervon können in Farb-, Grauwert- oder binärer Darstellung abgespeichert und/oder zusammengesetzt werden. Insbesondere können die in Farb- oder Grauwertdarstellung vorliegenden Bilder oder die Teile hiervon in eine binäre Darstellung überführt werden. Hierdurch kann der benötigte Speicherplatz und der Rechenzeitbedarf beim Zusammensetzen der Bilder verringert werden. Bilder in Farb- oder Grauwertdarstellung können beispielsweise beim Lesen von 2D-Strichcodes, insbesondere Stapel- oder Matrixcodes, vorliegen.

Zur verlustfreien Datenkompression können entlang einer Linie verlaufende, in binärer Darstellung vorliegende Bildinhalte der Bilder lauflängencodiert werden. Insbesondere können beim Zusammensetzen der Bilder oder der Teile hiervon übereinstimmende lauflängencodierte Datenfolgen der Bilder überlagert werden.

Weitere vorteilhafte Ausführungsformen der Erfindung sind in den Unteransprüchen angegeben.

Im Folgenden wird die Erfindung anhand eines Ausführungsbeispiels unter Bezugnahme auf die Zeichnungen näher erläutert; in diesen zeigen:
- Fig. 1a - 1d: einen Strichcode, der durch das Bildfeld einer Matrix-kamera bewegt wird,
- Fig. 2a - 2c: eine Einzelbildfolge des Strichcodes von Fig. 1, wobei die Bilder zu verschiedenen Zeitpunkten aufgenommen wurden,
- Fig. 3: eine zusammengesetzte Einzelbildfolge der Bilder von Fig. 2, und
- Fig. 4a - 4c: die Einzelbildfolge von Fig. 2, wobei die entlang der dargestellten Linien verlaufenden Bildinhalte der Bilder ausgelesen werden.

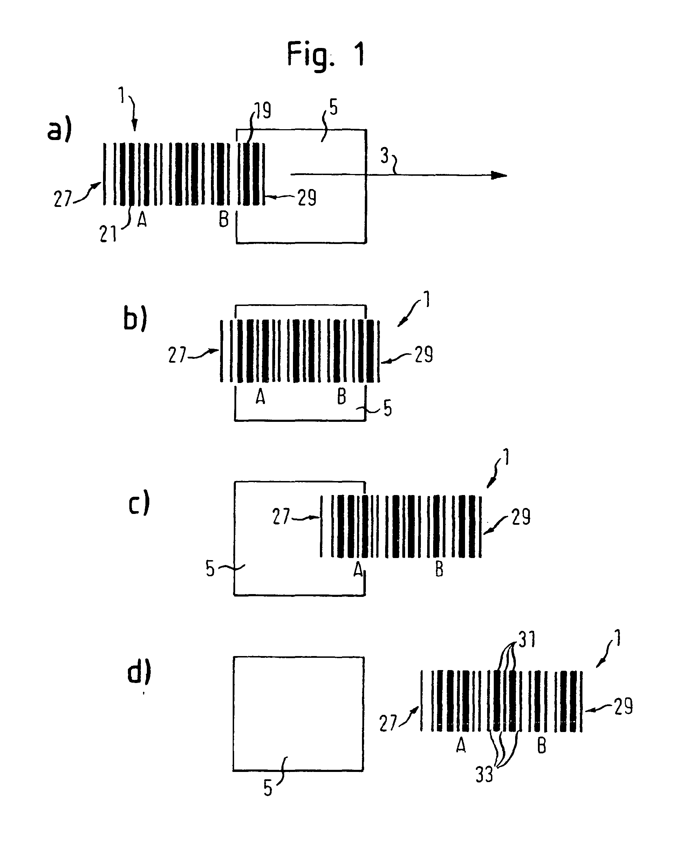

Fig. 1 zeigt einen zu lesenden 1D-Strichcode 1, der eine vorgegebene Anzahl von Codeelementen 31, 33 unterschiedlicher Breite umfasst. Als Codeelemente 31, 33 werden dabei sowohl die strichförmigen Balken 31 als auch die zwischen den Balken vorhandenen Lücken 33 bezeichnet. Der Strichcode 1, der auf eine Verpackung aufgedruckt sein kann, wird beispielsweise mittels eines nicht dargestellten Förderbands entlang einer Bewegungsrichtung 3 durch das Bildfeld 5 einer nicht dargestellten Matrixkamera bewegt. Die Fig. 1a bis 1d zeigen den Strichcode 1 zu verschiedenen Zeitpunkten seiner Bewegung, die mit konstanter Geschwindigkeit v erfolgt. Grundsätzlich kann die Geschwindigkeit v aber auch variabel sein. Im Gegensatz zu Fig. 1 kann der Strichcode 1 auch schräg durch das Bildfeld 5 der Matrixkamera bewegt werden, solange dabei die Breiten sämtlicher Codeelemente 31, 33 des Strichcodes 1 erfasst werden können.

Wie insbesondere anhand von Fig. 1b zu erkennen ist, passt der Strichcode 1 aufgrund seiner Größe nicht vollständig in das Bildfeld 5 der Matrixkamera, sondern ragt mit seinen beiden Enden 27, 29 seitlich über das Bildfeld 5 der Matrixkamera hinaus. In den Fig. 1a und 1c ist der Strichcode 1 mit jeweils einem seiner beiden Enden 27, 29 innerhalb des Bildfelds 5 angeordnet. In Fig. 1d hat der Strichcode 1 das Bildfeld 5 bereits wieder verlassen.

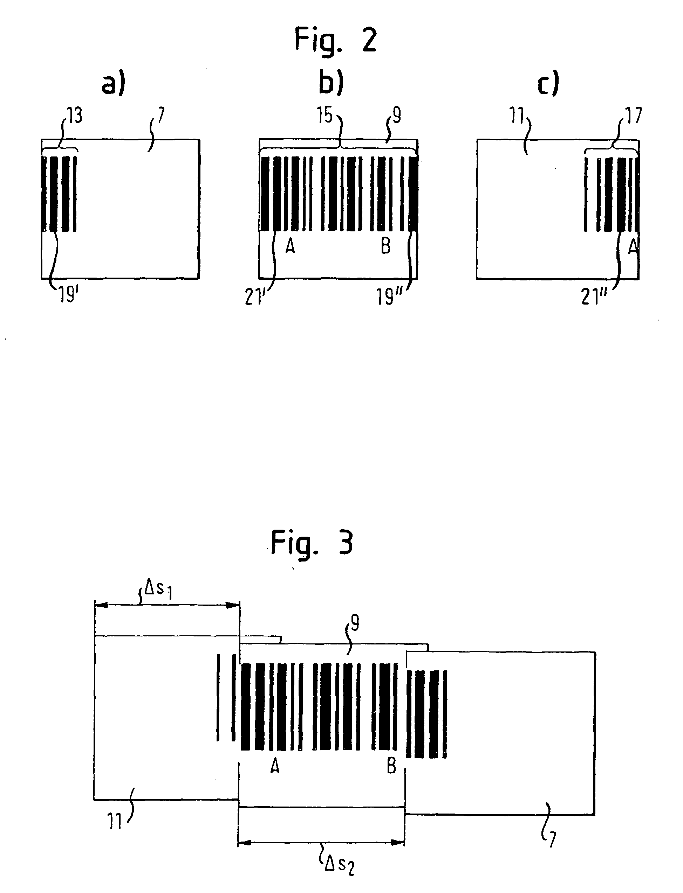

Die Fig. 2a bis 2c zeigen drei Bilder 7, 9, 11 von Teilabschnitten des Strichcodes 1, die mittels der Matrixkamera zu den in den Fig. 1a bis 1c dargestellten Zeitpunkten aufgenommen wurden. In Fig. 2a ist das in Bewegungsrichtung 3 gesehen vorauslaufende Ende des Strichcodes 1 und ein Abbild 13 eines vorderen Teilabschnitts des Strichcodes 1 erfasst. In Fig. 2b ist ein Abbild 15 eines mittleren Teilabschnitts des Strichcodes 1 erfasst. Fig. 2c zeigt das in Bewegungsrichtung 3 gesehen nachlaufende Ende des Strichcodes 1, wobei ein Abbild 17 eines hinteren Teilabschnitts des Strichcodes 1 erfasst ist. Grundsätzlich können aber auch lediglich zwei oder beliebig viele Bilder aufgenommen werden. Die mittels der Matrixkamera aufgenommenen Bilder 7, 9, 11 werden in einen Datenspeicher gespeichert.

Dabei ist beispielsweise ein Balken 19 des Strichcodes 1 (Fig. 1) sowohl dem vorderen Teilabschnitt als auch dem mittleren Teilabschnitt des Strichcodes 1 zugeordnet. Dementsprechend sind Abbilder 19', 19" des Balkens 19 in den Bildern 7, 9 enthalten (Fig. 2). Ein Balken 21 des Strichcodes 1 (Fig. 1) hingegen ist sowohl dem hinteren Teilabschnitt als auch dem mittleren Teilabschnitt des Strichcodes 1 zugeordnet, so dass Abbilder 21', 21" in den Bildern 9, 11 enthalten sind (Fig. 2).

Wie in Fig. 3 dargestellt ist, werden zur Rekonstruktion der durch den Strichcode 1 codierten Information die Bilder 7, 9, 11 in einem nicht dargestellten Rekonstruktionspuffer mittels einer nicht dargestellten Rekonstruktionseinheit, beispielsweise einem Mikroprozessor, zu einem vollständigen Abbild des Strichcodes 1 zusammengesetzt, wobei das Bild 9 bzw. 11 gegenüber dem Bild 7 bzw. 9 um Δs₁ bzw. Δs₂ in x-Richtung, die der Bewegungsrichtung 3 des Strichcodes 1 entspricht, verschoben ist. In Fig. 3 sind die Bilder 7, 9, 11 lediglich der Anschaulichkeit halber in y-Richtung gegeneinander versetzt.

Die gegenseitige Verschiebung Δs₁ bzw. Δs₂ der aufeinanderfolgend aufgenommenen Bilder 7, 9 bzw. 9, 11 kann bei konstanter und bekannter Geschwindigkeit v aus dem Produkt der Geschwindigkeit v des Strichcodes 1 und der Zeitspanne t zwischen den beiden Aufnahmen berechnet werden: Δsᵢ ∝ vᵢ × tᵢ. Alternativ oder zusätzlich kann die Verschiebung Δsᵢ auch durch Korrelation der Abbilder derjenigen Codeelemente 31, 33 bestimmt werden, die in beiden Bildern 7, 9 bzw. 9, 11 abgebildet sind. Für eine derartige Korrelation sind in der Regel mehrere aneinander gereihte Codeelemente 31, 33 erforderlich, die insbesondere das Codeelement 19 bzw. 21 umfassen. Es können aber auch übereinstimmende Bildinhalte korreliert werden, die die Umgebung des Strichcodes 1 repräsentieren.

Die Korrelation übereinstimmender Bildinhalte der Bilder 7, 9, 11 kann insbesondere zur Feinkorrektur einer beispielsweise aus dem Produkt einer lediglich näherungsweise bekannten Geschwindigkeit v des Strichcodes 1 und einer Zeitspanne t zwischen den beiden Aufnahmen berechneten gegenseitigen Verschiebung Δsᵢ verwendet werden. Darüber hinaus kann die Verschiebung Δsᵢ auch durch Vergleich der Bildpositionen von Start-, Stopp- und/oder Mittenzeichen des Strichcodes 1 bestimmt werden. Grundsätzlich kann die Überlagerungsoperation beim Zusammensetzen der Bilder 7, 9, 11 aus dem Mitteln von korrespondierenden Pixeln der Bilder 7, 9, 11 bestehen.

Gemäß einer Ausführungsform der Erfindung werden, wie nachstehend erläutert, im Gegensatz zu Fig. 3 lediglich Teile der Bilder 7, 9, 11 zu einem Abbild des Strichcodes 1 zusammengesetzt.

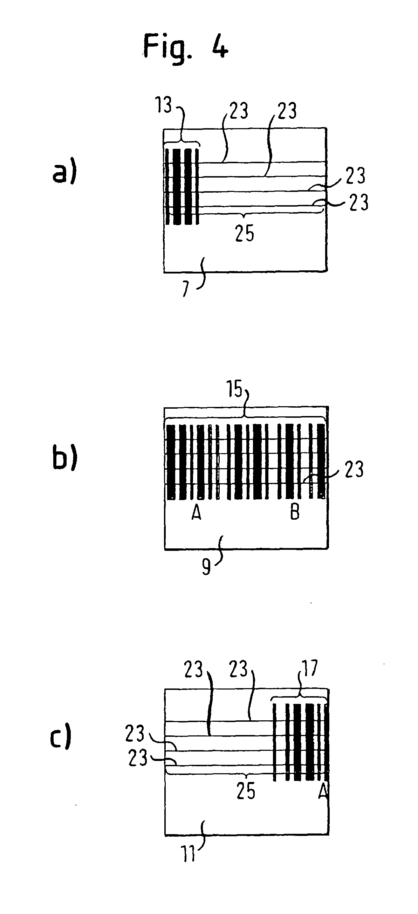

In den Fig. 4a bis 4c sind die Bilder 7, 9, 11 der Fig. 2a bis 2c dargestellt. Zur Rekonstruktion der durch den Strichcode 1 codierten Information werden zunächst entlang einer oder mehrerer Linien 23 verlaufende Bildinhalte, beispielsweise Pixelfolgen 25 der Bilder 7, 9, 11 ausgelesen. Die Linien 23 verlaufen dabei jeweils senkrecht zur Längserstreckung der in dem jeweiligen Bild 7, 9, 11 abgebildeten Codeelemente 31, 33. Im Gegensatz zu Fig. 4 können die Linien 23 aber auch in verschiedenen Höhen durch die Bilder 7, 9, 11 und/oder schräg zur Längserstreckung der abgebildeten Codeelemente 31, 33 verlaufen.

Liegen die entlang der Linien 23 ausgelesenen Pixelfolgen 25 in Farb- oder Grauwertdarstellung vor, können sie in eine binäre Darstellung überführt werden. In binärer Darstellung vorliegende Pixelfolgen 25 können lauflängencodiert werden, so dass insbesondere die einzelnen Breiten der Codeelemente 31, 33 des Strichcodes 1 als aufeinander folgende Zahlenwerte vorliegen.

Zur Rekonstruktion der durch den Strichcode 1 codierten Information werden entlang einer oder mehrerer Linien 23 ausgelesene Pixelfolgen 25 in dem bereits vorstehend erläuterten Rekonstruktionspuffer zu einem Abbild des Strichcodes 1 zusammengesetzt, wobei aus dem Abbild des Strichcodes 1 die codierte Information rekonstruiert werden kann. Mit Hilfe mehrerer Linien 23 kann ein gemitteltes Abbild des Strichcodes 1 erzeugt werden.

Die gegenseitige Verschiebung der entlang der Linien 23 ausgelesenen Pixelfolgen 25 der aufgenommenen Bilder 7, 9 bzw. 9, 11 kann in Analogie zur Berechnung oder Bestimmung der gegenseitigen Verschiebung der aufgenommenen Bilder 7, 9 bzw. 9, 11 berechnet oder bestimmt werden.

Bei dem erfindungsgemäßen Verfahren werden mittels einer Matrixkamera aufgenommene Einzelbilder 7, 9, 11 des Strichcodes 1 oder Teile 25 hiervon, insbesondere entlang einer Linie 23 angeordnete Pixelfolgen 25, gegeneinander verschoben und phasenrichtig einander überlagert, so dass der Strichcode 1 vollständig decodiert werden kann.

### Bezugszeichenliste

- 1: Strichcode
- 3: Bewegungsrichtung
- 5: Bildfeld
- 7, 9, 11: Bild
- 13, 15, 17: Teilabschnitt
- 19: Balken
- 19', 19": Abbild eines Balkens
- 21: Balken
- 21', 21": Abbild eines Balkens
- 23: Linie
- 25: Pixelfolge
- 27, 29: Ende des Strichcodes
- 31,33: Codeelement

## Patentansprüche

1. Verfahren zum Lesen eines eine vorgegebene Anzahl von Codeelementen, insbesondere Balken und Lücken, umfassenden maschinenlesbaren Strichcodes (1), bei dem
von wenigstens zwei benachbarten und/oder einander überlappenden Teilabschnitten (13, 15, 17) des Strichcodes (1) mittels einer Matrixkamera jeweils ein zweidimensionales Bild (7, 9, 11) aufgenommen wird, wobei die einzelnen Teilabschnitte (13, 15, 17) jeweils wenigstens ein Codeelement und die Teilabschnitte (13, 15, 17) in Summe alle Codeelemente des Strichcodes (1) umfassen,
die Bilder (7, 9, 11) in einem Datenspeicher abgespeichert werden, und
zur Rekonstruktion der durch den Strichcode (1) codierten Information die abgespeicherten Bilder (7, 9, 11) oder Teile (25) hiervon zusammengesetzt werden,
**dadurch gekennzeichnet,**
**dass** zur Rekonstruktion der durch den Strichcode (1) codierten Information mehrere, jeweils entlang einer Linie (23) verlaufende Bildinhalte der Bilder (7, 9, 11) zusammengesetzt werden und über die mehreren Linien (23) ein gemitteltes Abbild des Strichcodes (1) erzeugt wird.

2. Verfahren nach Anspruch 1,
**dadurch gekennzeichnet,**
**dass** die Bilder (7, 9, 11) nacheinander, insbesondere mit einer konstanten Bildfrequenz, aufgenommen werden.

3. Verfahren nach Anspruch 1 oder 2,
**dadurch gekennzeichnet,**
**dass** zur Aufnahme der Bilder (7, 9, 11) der Strichcode (1) insbesondere mit einer konstanten Geschwindigkeit relativ zu der Matrixkamera bewegt wird.

4. Verfahren nach den Ansprüchen 2 und 3,
**dadurch gekennzeichnet,**
**dass** beim Zusammensetzen der Bilder (7, 9, 11) oder der Teile (25) hiervon deren gegenseitige Relativpositionen aus der Bildfrequenz der Aufnahmen und der Geschwindigkeit des Strichcodes (1) berechnet werden.

5. Verfahren nach einem der vorhergehenden Ansprüche,
**dadurch gekennzeichnet,**
**dass** beim Zusammensetzen der Bilder (7, 9, 11) oder der Teile (25) hiervon deren gegenseitige Relativpositionen durch Korrelation übereinstimmender Bildinhalte der Bilder (7, 9, 11) oder der Teile (25) hiervon bestimmt werden.

6. Verfahren nach einem der vorhergehenden Ansprüche,
**dadurch gekennzeichnet,**
**dass** beim Zusammensetzen der Bilder (7, 9, 11) oder der Teile (25) hiervon deren gegenseitige Relativpositionen durch Vergleich der Bildpositionen zumindest von Start-, Stopp- und/oder Mittenzeichen des Strichcodes (1) bestimmt werden.

7. Verfahren nach einem der vorhergehenden Ansprüche,
**dadurch gekennzeichnet,**
**dass** die abgespeicherten Bilder (7, 9, 11) oder die Teile (25) hiervon in einem Rekonstruktionspuffer zusammengesetzt werden.

8. Verfahren nach einem der vorhergehenden Ansprüche,
**dadurch gekennzeichnet,**
**dass** die Bilder (7, 9, 11) oder die Teile (25) hiervon in Farb-, Grauwert- oder binärer Darstellung abgespeichert und/oder zusammengesetzt werden.

9. Verfahren nach Anspruch 8,
**dadurch gekennzeichnet,**
**dass** die in Farb- oder Grauwertdarstellung vorliegenden Bilder (7, 9, 11) oder die Teile (25) hiervon in eine binäre Darstellung überführt werden.

10. Verfahren nach einem der vorhergehenden Ansprüche,
**dadurch gekennzeichnet,**
**dass** entlang einer Linie (23) verlaufende, in binärer Darstellung vorliegende Bildinhalte der Bilder (7, 9, 11) lauflängencodiert werden.

11. Vorrichtung zum Lesen eines eine vorgegebene Anzahl von Codeelementen, insbesondere Balken und Lücken, umfassenden maschinenlesbaren Strichcodes (1), insbesondere zur Durchführung des Verfahrens nach einem der vorhergehenden Ansprüche, mit
einer Matrixkamera zur Aufnahme von zweidimensionalen Bildern (7, 9, 11) von wenigstens zwei benachbarten und/oder einander überlappenden Teilabschnitten (13, 15, 17) des Strichcodes (1), wobei die einzelnen Teilabschnitte (13, 15, 17) jeweils wenigstens ein Codeelement und die Teilabschnitte (13, 15, 17) in Summe alle Codeelemente des Strichcodes (1) umfassen,
einem Datenspeicher zum Abspeichern der Bilder (7, 9, 11), und einer Rekonstruktionseinheit zum Zusammensetzen der abgespeicherten Bilder (7, 9, 11) oder von Teilen (25) hiervon zur Rekonstruktion der durch den Strichcode (1) codierten Information,
**gekennzeichnet durch**,
Mittel zum Zusammensetzen von mehreren, jeweils entlang einer Linie (23) verlaufenden Bildinhalten der Bilder (7, 9, 11) zur Rekonstruktion der **durch** den Strichcode (1) codierten Information, und Mittel zum Erzeugen eines gemittelten Abbilds des Strichcodes (1) über die mehreren Linien (23).

## Claims

1. A method of reading a machine-readable barcode (1) including a predetermined number of code elements, in particular bars and spaces, wherein
a respective two-dimensional image (7, 9, 11) is taken of at least two adjacent and/or mutually overlapping part sections (13, 15, 17) of the barcode (1) by means of a matrix camera, with the individual part sections (13, 15, 17) each including at least one code element and the part sections (13, 15, 15) including in total all the code elements of the barcode (1);
the images (7, 9, 11) are stored in a data memory; and
the stored images (7, 9, 11) or parts (25) hereof are assembled for the reconstruction of the information encoded by the barcode (1),
**characterised in that**
a plurality of image contents of the images (7, 9, 11) extending in each case along a line (23) are assembled and an averaged image of the barcode (1) is generated over the plurality of lines (23) for the reconstruction of the information encoded by the barcode (1).

2. A method in accordance with claim 1, **characterised in that** the images (7, 9, 11) are taken sequentially, in particular at a constant image frequency.

3. A method in accordance with claim 1 or claim 2, **characterised in that** the barcode (1) is moved, in particular at a constant speed relative to the matrix camera, for the taking of the images (7, 9, 11).

4. A method in accordance with claims 2 and 3, **characterised in that**, on the assembly of the images (7, 9, 11) or the parts (25) hereof, their reciprocal relative positions are calculated from the image frequency of the shots and the speed of the barcode (1).

5. A method in accordance with any one of the preceding claims, **characterised in that**, on the assembly of the images (7, 9, 11) or the parts (25) hereof, their reciprocal relative positions are determined by correlation of coinciding image contents of the images (7, 9, 11) or of the parts (25) hereof.

6. A method in accordance with any one of the preceding claims, **characterised in that**, on the assembly of the images (7, 9, 11) or the parts (25) hereof, their reciprocal relative positions are determined by a comparison of the image positions of at least start symbols, stop symbols and/or centre symbols of the barcode (1).

7. A method in accordance with any one of the preceding claims, **characterised in that** the stored images (7, 9, 11) or the parts (25) hereof are assembled in a reconstruction buffer.

8. A method in accordance with any one of the preceding claims, **characterised in that** the images (7, 9, 11) or the parts (25) hereof are stored and/or assembled in a colour representation, a grey scale representation or a binary representation.

9. A method in accordance with claim 8, **characterised in that** the images (7, 9, 11) or the parts (25) hereof present in a colour representation or grey scale representation are converted into a binary representation.

10. A method in accordance with any one of the preceding claims, **characterised in that** image contents of the images (7, 9, 11) extending along a line (23) and present in binary representation are run-length encoded.

11. An apparatus for the reading of a machine-readable barcode (1) including a predetermined number of code elements, in particular bars and spaces, in particular for the carrying out of the method in accordance with any one of the preceding claims, comprising
a matrix camera for the taking of two-dimensional images (7, 9, 11) of at least two adjacent and/or mutually overlapping part sections (13, 15, 17) of the barcode (1), with the individual part sections (13, 15, 17) each including at least one code element and the part sections (13, 15, 17) in total including all code elements of the bar bode (1);
a data memory for the storage of the images (7, 9, 11); and
a reconstruction unit for the assembly of the stored images (7, 9, 11) or of parts (25) hereof for the reconstruction of the information encoded by the barcode (1),
**characterised by**
means for the assembly of a plurality of image contents of the images (7, 9, 11) extending in each case along a line (23) for the reconstruction of the information encoded by the barcode (1); and means for the generation of an averaged image of the barcode (1) over the plurality of lines (23).

## Revendications

1. Procédé de lecture d'un code-barres (1) lisible par machine comprenant un nombre prédéterminé d'éléments de code, en particulier des barres et des lacunes, dans lequel
une image bidimensionnelle (7, 9, 11) est enregistrée à partir d'au moins deux tronçons partiels (13, 15, 17) voisins et/ou se chevauchant, du code-barres (1) au moyen d'une caméra matricielle, les tronçons partiels (13, 15, 17) individuels comprenant chacun au moins un élément de code du code-barres et les tronçons partiels (13, 15, 17) comprenant dans leur somme tous les éléments de code du code-barres (1), les images (7, 9, 11) étant mémorisées dans une mémoire de données, et
les images (7, 9, 11) mémorisées ou des parties (25) de celles-ci sont assemblées pour la reconstitution de l'information codée par le code-barres (1),
**caractérisé en ce que**
plusieurs contenus d'image s'étendant chacun le long d'une ligne (23), des images (7, 9, 11) sont assemblés pour la reconstitution de l'information codée par le code-barres (1), et une reproduction moyenne du code-barres (1) est engendrée sur plusieurs lignes (23).

2. Procédé selon la revendication 1,
**caractérisé en ce que**
les images (7, 9, 11) sont enregistrées les unes après les autres en particulier avec une fréquence d'images constante.

3. Procédé selon la revendication 1 ou 2,
**caractérisé en ce que**
pour enregistrer les images (7, 9, 11), le code-barres (1) est déplacé par rapport à la caméra matricielle en particulier avec une vitesse constante.

4. Procédé selon les revendications 2 et 3,
**caractérisé en ce que**
lors de l'assemblage des images (7, 9, 11) ou des parties (25) de celles-ci, on calcule leurs positions relatives mutuelles à partir de la fréquence d'image des prises de vue et de la vitesse du code-barres (1).

5. Procédé selon l'une quelconque des revendications précédentes,
**caractérisé en ce que**
lors de l'assemblage des images (7, 9, 11) ou des parties (25) de celles-ci, on détermine leurs positions relatives mutuelles par corrélation de contenus d'image coïncidant des images (7, 9, 11) ou des parties (25) de celles-ci.

6. Procédé selon l'une quelconque des revendications précédentes,
**caractérisé en ce que**
lors de l'assemblage des images (7, 9, 11) ou des parties (25) de celles-ci, on détermine leurs positions relatives mutuelles par comparaison des positions d'image au moins de marques de départ, d'arrêt et/ou de centrage du code-barres (1).

7. Procédé selon l'une quelconque des revendications précédentes,
**caractérisé en ce que**
les images (7, 9, 11) mémorisées ou les parties (25) de celles-ci sont assemblées dans un tampon de restitution.

8. Procédé selon l'une quelconque des revendications précédentes,
**caractérisé en ce que**
les images (7, 9, 11) ou les parties (25) de celles-ci sont mémorisées et/ou assemblées en représentation en valeur de couleurs, en valeur de gris, ou binaire.

9. Procédé selon la revendication 8,
**caractérisé en ce que**
les images (7, 9, 11) ou les parties (25) de celles-ci, en présence en valeur de couleur ou en valeur de gris, sont transférées dans une représentation binaire.

10. Procédé selon l'une quelconque des revendications précédentes,
**caractérisé en ce que**
des contenus d'image s'étendant le long d'une ligne (23) en présence en représentation binaire, des images (7, 9, 11), sont soumis à un codage RLE.

11. Dispositif de lecture d'un code-barres (1) lisible par machine comprenant un nombre prédéterminé d'éléments de code, en particulier des barres et des lacunes, en particulier pour mettre en oeuvre le procédé selon l'une quelconque des revendications précédentes, comportant
une caméra matricielle pour enregistrer des images bidimensionnelles (7, 9, 11) depuis deux tronçons partiels (13, 15, 17) voisins et/ou se chevauchant, du code-barres (1), les tronçons partiels (13, 15, 17) individuels comprenant chacun au moins un élément de code du code-barres et les tronçons partiels (13, 15, 17) comprenant dans leur somme tous les éléments de code du code-barres (1),
une mémoire de données pour mémoriser les images (7, 9, 11) et une unité de reconstitution pour assembler les images (7, 9, 11) mémorisées ou des parties (25) de celles-ci pour la reconstitution de l'information codée par le code-barres (1),
**caractérisé par**
des moyens pour assembler plusieurs contenus d'image s'étendant chacun le long d'une ligne (23), des images (7, 9, 11) pour reconstituer l'information codée par le code-barres (1), et des moyens pour engendrer une reproduction moyenne du code-barres (1) via les plusieurs lignes (23).
